# EUROPÄISCHE PATENTSCHRIFT

(11) **EP 2 162 998 B1**
(45) Veröffentlichungstag und Bekanntmachung des Hinweises auf die Patenterteilung: **25.04.2012**
(21) Anmeldenummer: 08749466.2
(22) Anmeldetag: 15.05.2008
(51) Int. Cl.: H04B 5/00, H04W 12/06, H04W 76/02, H04L 29/06, H04W 88/02

(54) **DATENKOMMUNIKATION ZWISCHEN ZWEI PASSIVEN PORTABLEN DATENTRÄGERN**
DATA COMMUNICATION BETWEEN TWO PASSIVE PORTABLE DATA MEDIA
COMMUNICATION DE DONNÉES ENTRE DEUX SUPPORTS DE DONNÉES PORTABLES PASSIFS

(30) Priorität: 16.05.2007 DE 102007022944
(43) Veröffentlichungstag der Anmeldung: 17.03.2010
(73) Patentinhaber: Giesecke & Devrient GmbH, 81677 München (DE)
(72) Erfinder: FINKENZELLER, Klaus, 85774 München (DE); MARTINI, Ullrich, 81669 München (DE)
(86) Internationale Anmeldenummer: PCT/EP2008/003918
(87) Internationale Veröffentlichungsnummer: WO 2008/138624

(56) Entgegenhaltungen:
- EP-A- 1 308 874
- WO-A-98/58510
- WO-A-2006/137740
- WO-A-2007/035863

## Beschreibung

Die Erfindung betrifft ein Verfahren zum Aufbau und zum Betrieb einer kontaktlosen Datenkommunikationsverbindung zwischen zwei passiven, portablen Datenträgern über ein Kommunikationsgerät sowie ein dementsprechendes Kommunikationsgerät.

Kontaktlos kommunizierende Datenträger sind in den unterschiedlichsten Ausführungsformen und für zahlreiche Anwendungen bekannt, beispielsweise als kontaktlose Chipkarten zum Ticketing oder im Zahlungsverkehr, als Sicherheitsmodule zur Zutrittskontrolle oder als RFID-Tags zur Warensicherung.

Unterschiedliche proprietäre sowie standardisierte Technologien und Protokolle zur kontaktlosen Kommunikation kommen dabei zur Anwendung, beispielsweise kontaktlose Chipkarten nach ISO/IEC 14443 oder ISO/IEC 15693 oder Datenträger, die gemäß den NFC-Protokollen ("Near Field Communication") NFCIP-1 oder NFCIP-2 gemäß ECMA-340 bzw. ECMA-352 kommunizieren.

Herkömmlich und systembedingt nimmt ein portabler Datenträger, beispielsweise eine Chipkarte oder ein Sicherheitsmodul, bei der Kommunikation mit einem Lesegerät eine passive, reaktive Rolle als so genannter "Slave" (im NFC-Zusammenhang auch "Target" genannt) ein und ist darauf angewiesen, von dem entsprechenden Lesegerät in der aktiven Rolle eines so genannten "Masters" (im NFC-Zusammenhang auch "Initiator" genannt) zur Kommunikation aus einer eventuell größeren Anzahl von gleichrangigen Datenträgern ausgewählt und aufgefordert zu werden. Danach kann der Datenträger lediglich Anfragen, Kommandos oder Befehle von dem Lesegerät empfangen und diese entsprechend dem gewählten Kommunikationsprotokoll beantworten. Eine Kommunikation zwischen zwei derartigen passiven Datenträgern ist also nicht möglich, da in jedem Fall ein aktiver Kommunikationspartner als "Master" benötigt wird.

Ferner können, beispielsweise im Zahlungsverkehr oder im Ticketing, Anwendungsdaten zur sicheren Aufbewahrung und zum Schutz vor Manipulation in einem Sicherheitsmodul in Form eines portablen Datenträgers, der in ein NFC-Gerät integrierbar ist, oder in Form eines fest mit dem NFC-Gerät verbundenen Moduls gespeichert werden. Dabei stellt das NFC-Gerät eine passive Kommunikationsschnittstelle für den dadurch in einer passiven Rolle als "Target" einsetzbaren Datenträger bereit. Das NFC-Gerät, beispielsweise ein entsprechend eingerichtetes Mobilfunkendgerät, dient dabei also als Kommunikationsschnittstelle und Modem zwischen dem als "Target" fungierenden passiven Sicherheitsmodul und dem als Initiator fungierenden aktiven Lesegerät. In einem solchen Zusammenhang wird von Secure-NFC gesprochen.

Die US 7,150,407 B1 offenbart ein System zum Datenaustausch zwischen mindestens zwei kontaktlosen Datenträgern, wobei mindestens einer der Datenträger den Datenaustausch aktiv als "Master" steuert und mindestens ein anderer Datenträger passiv als "Slave" gesteuert wird. Der Datenträger, der die Masterrolle einnimmt, stellt dabei die Energie zur Verfügung, die zum Betreiben mindestens eines anderen Slave-Datenträgers benötigt wird. Eine Steuerapplikation, die die Master-Funktion implementiert, ist in dem steuernden Master-Datenträger gespeichert und wird von diesem ausgeführt.

Die US 7,128,274 B2 beschreibt eine sichere Transaktionskarte mit einer NFC-Schnittstelle, wobei die NFC-Schnittstelle wahlweise aktiviert oder deaktiviert werden und im aktivierten Zustand als "Initiator" oder als "Target" betrieben werden kann, um als "Initiator" auf der Karte gespeicherte Daten nach dem Aufbau einer Kommunikationsverbindung mit einem weiteren NFC-Kommunikationsgerät an dieses aktiv zu senden bzw. als "Target" passiv Anfragen eines solchen NFC-Kommunikationsgeräts bezüglich in der Karte gespeicherter Daten zu beantworten. Die die NFC-Schnittstelle steuernde Software ist auf der Karte gespeichert und wird auf einem Prozessor der Karte ausgeführt. Weiterhin verfügt die Karte über eine eigene Energieversorgung.

Die WO2006/137740 offenbart ein Verfahren zum Aufbauen einen Datenkommunikationsverbing zwischen zwei passiven, portablen Datenträgern nach dem Oberbegriff des Anspruchs 1.

Es ist die Aufgabe der vorliegenden Erfindung, ein Verfahren zur kontaktlosen Datenkommunikation zwischen passiven portablen Datenträgern, insbesondere kontaktlosen Chipkarten, vorzuschlagen.

Diese Aufgabe wird durch ein Verfahren und ein Kommunikationsgerät mit den Merkmalen der unabhängigen Ansprüche gelöst. Vorteilhafte Ausgestaltungen und Weiterbildungen sind in davon abhängigen Ansprüchen angegeben.

Der Grundgedanke des erfindungsgemäßen Verfahrens besteht darin, ein Kommunikationsgerät mit einer Koordinierungsapplikation vorzusehen, welche eine kontaktlose Datenkommunikation zwischen zwei passiven portablen Datenträgern koordiniert und es durch diese Koordination der Kommunikation zwischen den beiden passiven Datenträgern ermöglicht, einen der an sich passiven Datenträger dem anderen gegenüber als aktiven Kommunikationspartner erscheinen zu lassen.

Ein Kommunikationspartner einer Kommunikation zwischen zwei Kommunikationspartnern wird im Rahmen der Erfindung als passiv bezeichnet, wenn er lediglich in der Lage ist, reaktiv Anfragen, Kommandos, Befehle und dergleichen eines anderen, aktiven Kommunikationspartners entgegenzunehmen und zu beantworten bzw. auszuführen. Es bleibt dem aktiven Kommunikationspartner vorbehalten, eine Kommunikation zu starten, zu steuern und zu beenden. Zahlreiche Kommunikationsprotokolle sehen eine Kommunikation zwischen einem aktiven und einem passiven Kommunikationspartner vor. Der aktive Kommunikationspartner wird auch "Master" oder "Initiator" genannt, der passive Kommunikationspartner "Slave" oder "Target".

Demgemäß baut bei dem erfindungsgemäßen Verfahren zum Aufbau einer Datenkommunikationsverbindung zwischen einem ersten und zweiten passiven, portablen Datenträger die Koordinierungsapplikation des Kommunikationsgeräts eine erste Datenkommunikationsverbindung zwischen dem Kommunikationsgerät und dem ersten Datenträger auf. Des Weiteren baut die Koordinierungsapplikation auch eine kontaktlose zweite Datenkommunikationsverbindung zwischen dem Kommunikationsgerät als aktivem Kommunikationspartner und dem zweiten Datenträger als passivem Kommunikationspartner auf. Zwischen den beiden Datenträgern wird also durch Vermittlung des Kommunikationsgeräts eine indirekte, durchgängige Datenkommunikationsverbindung aufgebaut, wobei der Abschnitt zwischen dem Kommunikationsgerät und dem zweiten Datenträger als kontaktlose Master/Slave- bzw. Initiator/Target-Kommunikationsverbindung ausgestaltet ist, während der Abschnitt zwischen dem Kommunikationsgerät und dem ersten Datenträger eine beliebig ausgestaltete Kommunikationsverbindung sein kann, mit der Einschränkung, dass der erste Datenträger technisch ungeeignet ist, als aktiver Kommunikationspartner zu fungieren. Das Kommunikationsgerät bildet in dieser Hinsicht gleichsam eine Brücke für die Datenkommunikation zwischen den beiden Datenträgern.

Die Koordinierungsapplikation koordiniert eine Datenkommunikation zwischen dem ersten und dem zweiten Datenträger über die erste und die zweite Datenkommunikationsverbindung derart, dass der erste Datenträger gegenüber dem zweiten Datenträger als aktiver Kommunikationspartner erscheint, d.h. der zweite Datenträger Anfragen des ersten Datenträgers empfängt und beantwortet. Dabei kann das Kommunikationsgerät zusammen mit dem ersten Datenträger dem zweiten Datenträger gegenüber als Black Box auftreten, die insgesamt die Rolle eines aktiven Kommunikationspartners gegenüber dem passiven zweiten Datenträger einnimmt, so dass eine Master/Slave-Kommunikation zwischen der aktiven Einheit aus erstem Datenträger und Kommunikationsgerät und dem passiven zweiten Datenträger durch die Koordinierungsapplikation aufgebaut wird. Der erste Datenträger kann also mit Hilfe der Koordinierungsapplikation mit dem Kommunikationsgerät quasi zu einer Einheit verbunden werden, die als solche gemeinsam die "Master"-Rolle gegenüber dem zweiten Datenträger als "Slave" einnimmt. Dem zweiten Datenträger kommt insofern die Rolle zu, auf Anfragen und Kommandos des ersten Datenträgers zu antworten. Insoweit nimmt der erste passive Datenträger durch die Koordination der Koordinierungsapplikation gleichsam eine aktive Rolle gegenüber dem zweiten Datenträger ein.

Mit Hilfe des erfindungsgemäßen Verfahrens wird also eine Datenkommunikation zwischen zwei handelsüblichen, passiven Datenträgern auf einfache Weise ermöglicht, ohne dass die Datenträger dazu verändert oder nachgerüstet werden müssen. Darüber hinaus ist es möglich, jedem der beiden Datenträger die "aktive" Rolle zuzuordnen.

Die erste Datenkommunikationsverbindung zwischen dem Kommunikationsgerät und dem ersten Datenträger kann auf verschiedene Art und Weise ausgebildet sein. Selbstverständlich kann eine Kommunikation zwischen der Koordinierungsapplikation und dem ersten Datenträger einem Master/Slave-Kommunikationsprotokoll folgen, in dem der erste Datenträger die passive Rolle und die Koordiruerungsapplikation die aktive Rolle einnimmt. Es ist aber auch möglich, dass die Koordinierungsapplikation und der erste Datenträger über davon abweichende Mechanismen Daten austauschen, beispielsweise indem der erste Datenträger mit dem Kommunikationsgerät gekoppelt ist und beide Zugriff zu einem gemeinsamen Speicherbereich haben. Dieser Speicherbereich kann sowohl dem ersten Datenträger als auch dem Kommunikationsgerät zugeordnet sein.

Das erfindungsgemäße Kommunikationsgerät umfasst einen Prozessor, einen Speicher, eine Kontaktlosschnittstelle und die in dem Speicher gespeicherte und auf dem Prozessor ausführbare Koordinierungsapplikation, die eingerichtet ist, die Schritte des erfindungsgemäßen Verfahrens durchzuführen. Die Kontaktlosschnittstelle des Kommunikationsgeräts kann dabei derart ausgestaltet sein, dass sie mit gängigen kontaktlosen Datenträgern kompatibel ist. Genauso kann die Koordinierungsapplikation die gängigen Kontaktloskommunikationsprotokolle unterstützen.

Das Koordinieren der Datenkommunikation durch die Koordinierungsapplikation kann das Senden einer Anfrage von dem Kommunikationsgerät an den zweiten Datenträger über die zweite Master/Slave-Datenkommunikationsverbindung und das Empfangen einer Antwort des zweiten Datenträgers auf die Anfrage über die zweite Datenkommunikationsschnittstelle umfassen. Weiterhin kann die Koordinierungsapplikation Anfragedaten des ersten Datenträgers über die erste Datenkommunikationsschnittstelle empfangen und eine die Anfragedaten umfassende Anfrage erzeugen, um diese als Anfrage des ersten Datenträgers an den zweiten Datenträger weiterzuleiten. Alternativ oder zusätzlich kann die Koordinierungsapplikation Antwortdaten aus der empfangenen Antwort des zweiten Datenträgers extrahieren und diese Antwortdaten über die erste Datenkommunikationsschnittstelle an den ersten Datenträger senden, beispielsweise um eine Beantwortung von vorher empfangenen Anfragedaten vorzunehmen.

Auf diese Weise lässt sich also eine vollständige Datenkommunikation zwischen dem ersten und dem zweiten Datenträger durchführen. Die Koordinierungsapplikation dient bei dieser Kommunikation dazu, die Anfrage- und Antwortdaten in eine entsprechende Anfrage zu integrieren bzw. aus einer entsprechenden Antwort zu extrahieren, wobei die Anfragen und Antworten, die in einem Format gemäß einem geeigneten Master/Slave-Kommunikationsprotokoll gebildet sind, gleichsam als Transporthüllen für die eigentlich auszutauschenden Anfrage- und Anwortdaten zwischen dem ersten und dem zweiten Datenträger dienen. Weiterhin ist es die Aufgabe der Koordinierungsapplikation, die Voraussetzungen und Rahmenbedingungen für die entsprechende Datenkommunikation zu schaffen, also eine Datenkommunikationsverbindung aufzubauen, die Kommunikation zu initiieren, zu steuern und zu beenden.

Der Steueraspekt der Koordinierungsapplikation kann auch umfassen, den zweiten Datenträger vor dem Aufbau der zweiten Datenkommunikationsverbindung aus einer Menge von mehreren passiven Datenträgern auszuwählen, beispielsweise im Rahmen eines Antikollisionsverfahrens. Auf diese Weise wird es dem ersten Datenträger ermöglicht, mit mehreren zweiten Datenträgern Daten auszutauschen, wenn die jeweiligen zweiten Datenträger von der Koordinierungsapplikation des Kommunikationsgeräts nacheinander oder abwechselnd zur Kommunikation mit dem ersten Datenträger ausgewählt werden.

Das Koordinieren der Datenkommunikation zwischen dem ersten und dem zweiten Datenträger durch die Koordinierungsapplikation kann weiterhin das Koordinieren einer gegenseitigen Authentisierung zwischen dem ersten und dem zweiten Datenträger umfassen. Dabei wird die gegenseitige Authentisierung derart koordiniert, dass die Koordinierungsapplikation zu keinem Zeitpunkt des Authentisierungsverfahrens im Besitz einer geheimen Information ist, mit deren Hilfe die gegenseitige Authentisierung durchgeführt wird. Wird also beispielsweise zwischen dem ersten und dem zweiten Datenträger ein Sitzungsschlüssel ausgehandelt, der mittels jeweils in dem ersten und zweiten Datenträger gespeicherten geheimen Daten berechnet wird, so ist die Koordinierungsapplikation zu keinem Zeitpunkt im Besitz dieser geheimen Daten, sondern stößt lediglich die zu dem Authentisierungsverfahren notwendigen Schritte an und überträgt notwendige Zwischenberechnungen. Dadurch wird anschließend eine gesicherte Kommunikation zwischen dem ersten und dem zweiten Datenträger sichergestellt.

Das Kommunikationsgerät kann eingerichtet sein, den ersten und/oder den zweiten Datenträger mit Energie zu versorgen. Dabei empfängt der zweite Datenträger für gewöhnlich Energie über induktive Kopplung aus dem elektromagnetischen Wechselfeld, welches das Kommunikationsgerät zu diesem Zweck und zum Zweck des Aufbaus der kontaktlosen zweiten Datenkommunikationsverbindung aufbaut. Der erste Datenträger kann, sofern auch die erste Datenkommunikationsverbindung kontaktlos vorgesehen ist, gleichfalls seine Energie über induktive Kopplung mit dem Kommunikationsgerät erhalten. Es ist aber auch möglich, dass der erste Datenträger kontaktbehaftet mit dem Kommunikationsgerät gekoppelt ist und beispielsweise über einen Akkumulator des Kommunikationsgeräts kontaktbehaftet mit Energie versorgt wird. Somit ist eine Datenkommunikation zwischen dem ersten und dem zweiten Datenträger nur von dem Kommunikationsgerät abhängig, welches ohnehin benötigt wird, und nicht noch von zusätzlichen Energiequellen, deren Ausfallen eine Datenkommunikation verhindern würde.

Die erste Datenkommunikationsverbindung zwischen dem Kommunikationsgerät und dem ersten Datenträger kann als kontaktlose Datenkommunikationsverbindung aufgebaut werden, falls das Kommunikationsgerät und der erste Datenträger über eine Kontaktlosschnittstelle verbunden sind. Es ist gleichfalls möglich, dass die erste Datenkommunikationsverbindung als eine kontaktbehaftete Datenkommunikationsverbindung aufgebaut wird, wenn das Kommunikationsgerät und der erste Datenträger über eine Kontaktschnittstelle verbunden sind. Der Aufbau der kontaktlosen Datenkommunikationsverbindung zwischen dem ersten und dem zweiten Datenträger kann also mittels des Kommunikationsgeräts unabhängig vom Typ des ersten Datenträgers durchgeführt werden, wodurch das Verfahren zusätzlich an Flexibilität gewinnt.

Die zweite Datenkommunikationsverbindung zwischen dem Kommunikationsgerät und dem zweiten Datenträger kann über eine NFC-Schnittstelle des Kommunikationsgeräts und eine entsprechende NFC-Schnittstelle des zweiten Datenträgers aufgebaut werden und die Datenkommunikation über das NFC-Kommunikationsprotokoll koordiniert werden. Das Kommunikationsgerät kann dann als "Initiator" mit einem zweiten Datenträger als NFC-"Target" Daten austauschen, wenn der zweite Datenträger beispielsweise eine kontaktlose Chipkarte nach ISO/IEC 14443 oder ISO/IEC 15693 ist. Eine entsprechend aufgebaute erste Datenkommunikationsverbindung zwischen dem ersten Datenträger und dem Kommunikationsgerät ist gleichfalls möglich. Auf diese Weise wird also beispielsweise eine Datenkommunikation zwischen zwei passiven Chipkarten nach ISO/IEC 14443 möglich.

Das Kommunikationsgerät kann ein Mobilfunkendgerät mit zusätzlicher NFC-Schnittstelle sein. Die Koordinierungsapplikation wird dann auf einem Prozessor des Mobilfunkendgeräts, beispielsweise dem Baseband-Controller, ausgeführt. Der erste Datenträger kann dann, beispielsweise als (U)SIM-Mobilfunkkarte oder anderes Sicherheitsmodul, in das Mobilfunkendgerät integriert werden. In diesem Fall wird die erste Datenkommunikationsverbindung zwischen dem Mobilfunkendgerät und der (U)SIM-Mobilfunkkarte durch die Koordinierungsapplikation als kontaktbehaftete erste Datenkommunikationsverbindung aufgebaut. Auf diese Weise wird es für ein Sicherheitsmodul in einem Mobilfunkendgerät möglich, nicht nur als passiver Kommunikationspartner an einer Kommunikation teilzunehmen (wie beispielsweise beim Secure-NFC), sondern in Verbindung mit der Koordinierungsapplikation auch in der Rolle eines aktiven Kommunikationspartners aufzutreten.

Gleichfalls kann das Kommunikationsgerät als ein portables RFID-Lesegerät ausgebildet sein, welches über einen Prozessor und eine geeignete eigene Energieversorgung verfügt. Auf dem Prozessor wird die Koordinierungsapplikation ausgeführt. Die erste Datenkommunikationsverbindung zwischen dem ersten Datenträger und dem RFID-Lesegerät wird in diesem Fall als kontaktlose Datenkommunikationsverbindung zwischen der RFID-Schnittstelle des Lesegeräts und einer entsprechenden Schnittstelle des ersten Datenträgers aufgebaut. Die Datenkommunikation zwischen dem RFID-Lesegerät und dem ersten Datenträger verläuft dann über ein Kommunikationsprotokoll, welches für den ersten Datenträger die passive Rolle und für das Lesegerät die aktive Rolle vorsieht. Insbesondere werden sowohl der erste als auch der zweite Datenträger über ein von dem Lesegerät erzeugtes elektromagnetisches Wechselfeld mit Energie versorgt.

Als erster Datenträger wird vorzugsweise ein Sicherheitsmodul, beispielsweise eine (U)SIM-Mobilfunkkarte, ein TPM (Trusted Platform Module) oder dergleichen, oder ein Transaktionsmodul, wie beispielsweise eine Zahlungsverkehrs-Chipkarte, eingesetzt. Der zweite Datenträger kann entsprechend ausgebildet sein, also auch als Sicherheits- oder Transaktionsmodul. Es kann sich dabei aber auch um einen einfachen Transponder oder dergleichen handeln.

Nachfolgend wird die Erfindung anhand der begleitenden Zeichnungen beispielhaft beschrieben. Darin zeigen:
- Figur 1: an einer ersten Ausführungsform des erfindungsgemäßen Verfahrens beteiligte Komponenten; und
- Figur 2: an einer zweiten Ausführungsform des erfindungsgemäßen Verfahrens beteiligte Komponenten.

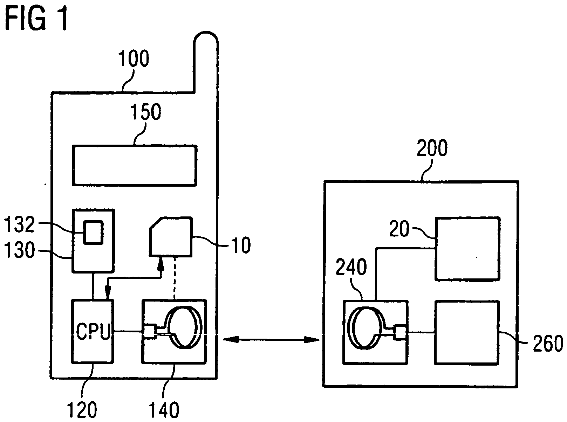

Mit Bezug auf Figur 1 umfasst ein als Mobilfunkendgerät ausgebildetes Kommunikationsgerät 100 einen Prozessor (CPU) 120, einen nichtflüchtigen, wiederbeschreibbaren Speicher 130, eine Kontaktlosschnittstelle 140, beispielsweise eine NFC-Schnittstelle, und eine Energieversorgung 150, beispielsweise in Form eines Akkumulators, welcher den Prozessor und gegebenenfalls die Kontaktlosschnittstelle mit Energie versorgt. In dem Speicher 130 können Daten und Applikationen gespeichert sein, wie z.B. die nachstehend beschriebene Koordinierungsapplikation 132. Ein Betriebssystem zur allgemeinen Steuerung des Kommunikationsgeräts kann ebenfalls in dem Speicher 130 gespeichert sein, aber auch in einem zusätzlichen ROM-Speicher (nicht gezeigt).

Ein erster portabler Datenträger 10 ist in Form einer (U)SIM-Mobilfunkkarte in das Mobilfunkendgerät 100 integriert. Die (U)SIM-Mobilfunkkarte kann als Sicherheitsmodul dienen, beispielsweise bei der Authentisierung des Mobilfunkendgeräts 100 gegenüber einem Mobilfunknetz, aber auch in anderen Anwendungen, wie nachstehend beschrieben. Der portable Datenträger 10 umfasst, jeweils nicht dargestellt, einen Prozessor, mindestens einen Speicher, eine Kontaktschnittstelle, um mit dem Kommunikationsgerät 100 kontaktbehaftet verbunden zu werden, und ein Betriebssystem zum Steuern des Datenträgers 10. Alternativ kann der portable Datenträger 10 auch ein weiteres, in dem Mobilfunkendgerät 100 integriertes Sicherheitsmodul, beispielsweise eine SmartCard, sein. Auch ein kontaktlos über die Kontaktlosschnittstelle 140 des Mobilfunkendgeräts 100 mit demselben verbundener portabler Datenträger 10, der entsprechend selbst über eine Kontaktlosschnittstelle verfügt, ist möglich.

Ein zweiter portabler Datenträger 20 ist in Figur 1 als Sicherheits- und Steuereinheit eines batterielosen Aktuators 200 dargestellt, beispielsweise eines batterielosen Schließzylinders. Ein Beispiel für einen batterielosen Aktuator zeigt DE 103 48 569 A1. Es ist auch möglich, dass der portable Datenträger 20 in einem anderen Gerät, beispielsweise in einem medizinischen Implantat integriert ist, oder als eigenständiger zweiter Datenträger 20, beispielsweise als kontaktlose Chipkarte, agiert. Der zweite portable Datenträger 20 umfasst, jeweils nicht dargestellt, einen Prozessor, mindestens einen Speicher, ein Betriebssystem zum Steuern des zweiten Datenträgers 20 und ist mit einer Kontaktlosschnittstelle 240 und einem Aktuator 260 des Schließzylinders 200 gekoppelt. Der Aktuator 260 des Schließzylinders 200 wird über die Kontaktlosschnittstelle 240 mit Energie versorgt, wenn sich die Kontaktlosschnittstelle 240 in einem entsprechenden elektromagnetischen Wechselfeld befindet, das beispielsweise von einem RFID-Lesegerät erzeugt wird. Der Schließzylinder 200 kann zusätzlich noch über einen Energiespeicher (nicht gezeigt) verfügen, in welchem überschüssige, über die Kontaktlosschnittstelle 240 aufgenommene Energie gespeichert wird. Ein Betätigen des Aktuators 260 kann zusätzlich über den zweiten portablen Datenträger 20 gesteuert werden, der seine Energie zum Betrieb ebenso wie vorstehend beschrieben über die Kontaktlosschnittstelle 240 erhält, indem das Betätigen erst ausgelöst wird, wenn von einem externen Gerät vorbestimmte Daten empfangen werden, beispielsweise ein Code, der zum Öffnen des Schließzylinders 200 berechtigt. Ein solcher Code kann beispielsweise auf dem ersten portablen Datenträger 10 gespeichert oder von diesem erzeugt werden.

Nach einem Starten der Koordinierungsapplikation 132 des Kommunikationsgeräts 100, beispielsweise beim Einschalten des Kommunikationsgeräts 100 oder durch Einwirkung eines Nutzers, baut die Koordinierungsapplikation 132 eine erste Datenkommunikationsverbindung mit dem ersten Datenträger 10 auf, in diesem Fall kontaktbehaftet. Die Datenübertragung zwischen der Koordinierungsapplikation 132 und dem ersten Datenträger 10 kann dann beispielsweise über entsprechende APDUs (application protocol data units) erfolgen. Genauso ist es möglich, dass ein Speicherbereich, beispielsweise im Speicher des Datenträgers 10, sowohl von der Koordinierungsapplikation 132 als auch einer Systemroutine des Datenträgers 10 beschrieben und ausgelesen werden kann, um auf diese Weise Daten auszutauschen, d.h. die Datenkommunikation zwischen dem Kommunikationsgerät 100 und dem ersten Datenträger 10 muss nicht notwendigerweise nach dem Master/Slave-Prinzip verlaufen.

Die Koordinierungsapplikation 132 baut weiterhin eine zweite Datenkommunikationsverbindung zu dem zweiten Datenträger 20 auf. Hierzu veranlasst die Koordinierungsapplikation 132 das Kommunikationsgerät 100, über die Kontaktlosschnittstelle 140 ein elektromagnetisches Wechselfeld zu erzeugen, vorzugsweise mit einer Frequenz von 13,56 MHz. Mittels induktiver Kopplung wird darüber der zweite Datenträger 20 über die Kontaktlosschnittstelle 240 mit Energie versorgt und eine kontaktlose Datenkommunikationsverbindung kann aufgebaut werden. Diese zweite Datenkommunikationsverbindung ist stets so angelegt, dass die Koordinierungsapplikation gegenüber dem zweiten Datenträger 20 als aktiver Kommunikationspartner auftritt und dementsprechend der zweite portable Datenträger 20 als passiver Kommunikationspartner. Beispielsweise kann diese zweite Datenkommunikationsverbindung jeweils über eine NFC-Schnittstelle 140, 240 des Kommunikationsgeräts 100 und des Schließzylinders 200 aufgebaut werden. Daten werden dann über das NFC-Kommunikationsprotokoll ausgetauscht, wobei die Koordinierungsapplikation die Rolle des "Initiators" einnimmt und der zweite portable Datenträger 20, der mit der Kontaktlosschnittstelle 240 verbunden ist, die Rolle des "Targets".

In dem Fall, dass sich zwei oder mehr Datenträger 20 in dem von dem Kommunikationsgerät 100 erzeugten Wechselfeld befinden, führt die Koordinierungsapplikation ein Antikollisionsverfahren durch, um einen Datenträger 20 aus der Mehrzahl der Datenträger auszuwählen, um eine störungsfreie Datenkommunikation zwischen dem Kommunikationsgerät 100 und dem jeweiligen zweiten Datenträger 20 sicherzustellen. Es können nacheinander oder abwechselnd mehrere Datenträger 20 von der Koordinierungsapplikation zur Kommunikation ausgewählt werden.

Sind die beiden Datenkommunikationsverbindungen, die erste zwischen dem Kommunikationsgerät 100 und dem ersten Datenträger 10 und die zweite zwischen dem Kommunikationsgerät 100 und dem zweiten Datenträger 20, aufgebaut, so kann die Koordinierungsapplikation 132 Informationen über den zweiten Datenträger 20 anfragen. Die daraufhin von dem zweiten Datenträger 20 empfangenen Informationsdaten können an den Benutzer des Kommunikationsgeräts 100 weitergegeben und/oder für die weitere Datenkommunikation verwendet werden. Insbesondere können in diesen Informationsdaten in formalisierter, standardisierter Form Informationen enthalten sein, wie eine nachfolgend beschriebene wechselseitige Authentisierung zwischen dem ersten Datenträger 10 und dem zweiten Datenträger 20 auszuführen ist. Eine solche Information kann beispielsweise in Form einer script-oder batch-Datei empfangen werden, vorzugsweise in knapper Syntax, sodass wenige Bytes ausreichen, um die notwendige Information zu codieren, und ein Ausführen der Anweisungen für das Kommunikationsgerät 100 gefahrlos ist.

Die Koordinierungsapplikation 132 kann weiterhin von dem zweiten Datenträger 20 spezifische Informationen darüber erhalten, auf welche Weise das Authentisierungsverfahren abzulaufen hat. Dadurch ist es möglich, ein durchzuführendes Authentisierungsprotokoll an verschiedene zweite Datenträger 20 anzupassen. Eine solche spezifische Information kann beispielsweise ähnlich wie Java-Bytecode, aber in vereinfachter Form, aufgebaut sein. Ein erstes Byte kann die Information enthalten, einen nachstehend beschriebenen "get challenge"-Befehl auszuführen, ein weiteres Byte die Instruktion, die durch den "get challenge"-Befehl erhaltene Zufallszahl zu signieren, ein drittes Byte die Information, mit welchem Schlüssel dies zu geschehen hat, etc.

Die Koordinierungsapplikation 132 kann nun ein Authentisierungsprotokoll anstoßen, mittels dessen sich der erste Datenträger 10 und der zweite Datenträger 20 wechselseitig authentisieren können, damit nachfolgend eine gesicherte Datenübertragung zwischen den beiden Datenträgern gewährleistet werden kann und eine Manipulation der Datenübertragung durch Dritte ausgeschlossen werden kann. Dazu kann von der Koordinierungsapplikation 132 ein bekanntes Authentisierungsprotokoll (z.B. CWA 14890-1, ESignK) angestoßen werden, zusammen mit dem Hinweis, welche Schlüssel zu verwenden sind. Alternativ kann die Authentisierung beispielsweise ähnlich einem "mutual authenticate" gemäß der ISO/IEC 7816 durchgeführt werden. Darin sind allerdings ein Datenträger und ein Terminal als Kommunikationspartner vorgesehen. Deshalb muss die Koordinierungsapplikation 132 beispielsweise gegenüber dem zweiten Datenträger 20 die Rolle dieses Terminals übernehmen und diesen z.B. auffordern, eine Zufallszahl zu erzeugen. Ebenso muss dann der erste Datenträger 10 die Schritte des Authentisierungsprotokolls durchführen, die bei dem "mutual authenticate" gemäß der ISO/IEC 7816 dem Terminal zugedacht sind. Dies kann durch eine entsprechende Umformatierung der Protokolldaten erreicht werden. Beispielsweise erfragt die Koordinierungsapplikation 132 von dem zweiten Datenträger 20 mit dem Befehl "get challenge" eine Zufallszahl und übergibt diese an den ersten Datenträger 10 zur Signatur gemäß ESignK. Ein derart erhaltener Datensatz wird daraufhin von der Koordinierungsapplikation 132 in die Form eines "mutual authenticate"-Kommandos umformatiert, welches in dem zweiten Datenträger 20 ausgeführt wird.

Mit Varianten dieser Prozedur kann auch ein Geheimnis, beispielsweise ein Sitzungsschlüssel, zwischen dem ersten Datenträger 10 und dem zweiten Datenträger 20 ausgehandelt werden, welches dann zur Verschlüsselung der Datenübertragung zwischen den beiden Datenträgern benutzt werden kann.

Es ist zu bemerken, dass ein in der vorstehenden Weise ausgehandelter Sitzungsschlüssel nur jeweils dem ersten Datenträger 10 und dem zweiten Datenträger 20, nicht aber der Koordinierungsapplikation 132 bekannt ist. Wenn mindestens einer der beiden Datenträger ein Java-Betriebssystem umfasst, kann in einer Weiterbildung die vorstehend beschriebene Vorgehensweise vereinfacht werden, indem spezielle APDUs zur Datenkommunikation zwischen dem Kommunikationsgerät 100 und dem entsprechenden Datenträger implementiert werden. Ein entsprechendes Java-Applet auf dem Datenträger kann dann mittels eines ebenfalls vorhandenen Kryptoprozessors die von dem Protokoll geforderten Signaturen und Verschlüsselungen direkt durchführen.

Nach durchgeführter wechselseitiger Authentisierung, die wahlweise auch entfallen kann, kann nun die eigentliche von der Koordinierungsapplikation 132 koordinierte Datenkommunikation zwischen dem ersten Datenträger 10 und dem zweiten Datenträger 20 durchgeführt werden. Dazu sendet die Koordinierungsapplikation 132 eine Anfrage, beispielsweise mittels des NFC-Kommandos DEP_REQ (Data Exchange Protocol Request), an den zweiten Datenträger 20 über die kontaktlose zweite Datenkommunikationsverbindung und empfängt darüber eine Antwort des zweiten Datenträgers 20 auf diese Anfrage, beispielsweise mittels der entsprechenden NFC-Antwort DEP_RES (Data Exchange Protocol Response). Dabei kann die Anfrage Anfragedaten umfassen, die die Koordinierungsapplikation 132 über die erste Datenkommunikationsverbindung vom dem ersten Datenträger 10 empfangen hat. Diese Anfragedaten können mittels des Anfrage-Kommandos protokollgerecht im Nutzdatenanteil der entsprechenden Rahmen "verpackt" an den zweiten Datenträger 20 gesendet werden. Auf diese Weise erscheint der erste Datenträger 10 gegenüber dem zweiten Datenträger 20 als "Initiator" (bzw. "Master"), da der zweite Datenträger 20 die Koordinierungsapplikation 132 und den ersten Datenträger 10 bei einem derartigen Ablauf der Datenkommunikation als Einheit erkennt. Analog kann die Antwort des zweiten Datenträgers 20 Antwortdaten enthalten, die von der Koordinierungsapplikation 132 extrahiert werden, indem diese die Steuerinformationen des empfangenen formatabhängigen Rahmens entfernt. Diese Antwortdaten werden dann von der Koordinierungsapplikation 132 über die erste Datenkommunikationsverbindung an den ersten Datenträger 10 gesendet.

Die Koordinierungsapplikation 132 kann nach abgeschlossener Datenkommunikation die erste und zweite Datenkommunikationsverbindung abbauen und dadurch die Datenkommunikation zwischen dem ersten Datenträger 10 und dem zweiten Datenträger 20 beenden.

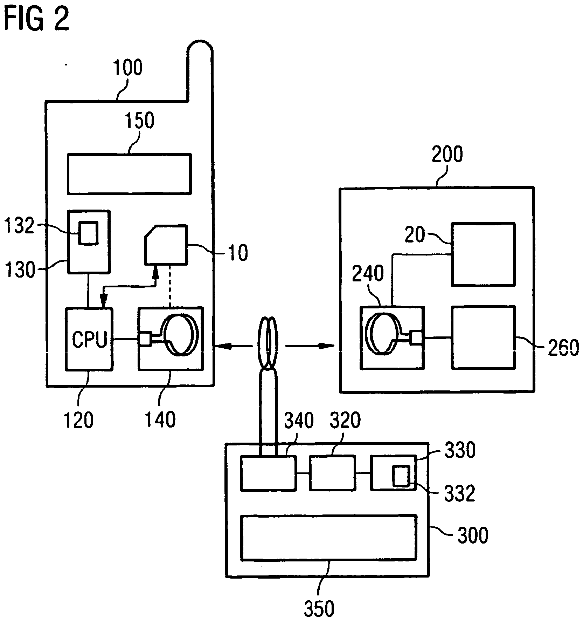

Mit Bezug auf Figur 2 umfasst ein weiteres Kommunikadonsgerät 300 in Form eines portablen RFID-Lesegeräts einen Prozessor 320, einen Speicher 330, eine Kontaktlosschnittstelle 340 und eine Energieversorgung 350, beispielsweise in Form eines Akkumulators. Eine Koordinierungsapplikation 332 ist in dem Speicher 330 gespeichert und auf dem Prozessor 320 ausführbar. Ein Betriebssystem, welches beispielsweise in einem zusätzlichen ROM-Speicher (nicht gezeigt) gespeichert sein kann, steuert das RFID-Lesegerät.

Die Funktionalität der Koordinierungsapplikation 332 entspricht der der vorstehend beschriebenen Koordinierungsapplikation 132 und das RFID-Lesegerät 300 kann alternativ zu dem Kommunikationsgerät 100 eingesetzt werden, um mittels der Koordinierungsapplikation 332 eine Datenkommunikationsverbindung zwischen dem ersten Datenträger 10 und dem zweiten Datenträger 20 aufzubauen und eine Datenkommunikation zwischen den beiden Datenträgern zu koordinieren. Das RFID-Lesegerät 300 kann beispielsweise als eine Art Notfallgerät eingesetzt werden, wenn die Energieversorgung 150 des Kommunikationsgeräts 100 erschöpft ist. Eine bestimmungsgemäße Anwendung des Kommunikationsgeräts 100 wäre dann nicht mehr möglich, also beispielsweise ein Betätigen des Schließzylinders 200 mit Hilfe des ersten Datenträgers 10 in Kommunikation mit dem zweiten Datenträger 20 in dem Schließzylinder 200.

Durch Erzeugen eines geeigneten elektromagnetischen Feldes mit Hilfe der eigenen Energieversorgung 350 über die Kontaktlosschnittstelle 340 und eine geeignete Platzierung am Einsatzort versorgt dann das RFID-Lesegerät 300 gleichzeitig sowohl den ersten Datenträger 10 über die Kontaktlosschnittstelle 140 mit Energie als auch den zweiten Datenträger 20 in dem Schließzylinder 200 über die Kontaktlosschnittstelle 240. Dabei ist zu beachten, dass beim Aufbau des Kommunikationsgeräts 100 sichergestellt wurde, dass der erste Datenträger 10 nicht nur über den Akkumulator 150 des Kommunikationsgeräts 100 mit Energie versorgt werden kann, sondern eben auch über die Kontaktlosschnittstelle 140 (durch eine gestrichelte Linie dargestellt). Das Kommunikationsgerät 100 muss dazu nicht in Betrieb sein. Auf diese Weise ist der Datenträger 10 auch bei fehlender Energieversorgung 150 seitens des Kommunikationsgeräts 100 immer noch als passiver Kommunikationspartner in einer kontaktlosen Datenkommunikation einsetzbar.

Der Ablauf der mittels der Koordinierungsapplikation 332 koordinierten Datenkommunikation zwischen dem ersten Datenträger 10 und dem zweiten Datenträger 20 verläuft im Wesentlichen wie vorstehend im Zusammenhang mit der mittels der Koordinierungsapplikation 132 koordinierten Datenkommunikation beschrieben. Im Unterschied dazu baut die Koordinierungsapplikation 332 nun eine kontaktlose erste Datenkommunikationsverbindung zwischen dem RFID-Lesegerät 300 und dem ersten Datenträger 10 auf, die dasselbe Kommunikationsprotokoll unterstützen kann wie die kontaktlose zweite Datenkommunikationsverbindung zwischen dem RFID-Lesegerät 300 und dem zweiten Datenträger 20.

Das RFID-Lesegerät 300 kann selbstverständlich auch als "vollwertiges" Kommunikationsgerät 300 und nicht nur in vorstehend beschriebenen Notfällen benutzt werden, beispielsweise um eine Datenkommunikation zwischen zwei gewöhnlichen kontaktlosen Chipkarten nach ISO/IEC 14443 zu koordinieren.

## Patentansprüche

1. Verfahren zum Aufbauen einer Datenkommunikationsverbindung zwischen einem ersten (10) und zweiten passiven, portablen Datenträger (20) durch ein Kommunikationsgerät (100; 300) mit einer Koordinierungsapplikation (132; 332), mit den Schritten:
- Aufbauen einer ersten Datenkommunikationsverbindung zwischen dem Kommunikationsgerät (100; 300) und dem ersten Datenträger (10) durch die Koordinierungsapplikation (132; 332);
- Aufbauen einer kontaktlosen zweiten Datenkommunikationsverbindung zwischen dem Kommunikationsgerät (100; 300) als aktivem Kommunikationspartner und dem zweiten Datenträger (20) als passivem Kommunikationspartner durch die Koordinierungsapplikation (132; 332); und
- Koordinieren einer Datenkommunikation zwischen dem ersten (10) und zweiten Datenträger (20) über die erste und zweite Datenkommunikationsverbindung durch die Koordinierungsapplikation (132; 332), **dadurch gekennzeichnet, dass** das Koordinieren derart erfolgt, dass der erste Datenträger (10) gegenüber dem zweiten Datenträger (20) als aktiver Kommunikationspartner erscheint.

2. Verfahren nach Anspruch 1, **dadurch gekennzeichnet, dass** das Koordinieren der Datenkommunikation die Schritte
- Senden einer Anfrage von dem Kommunikationsgerät (100; 300) an den zweiten Datenträger (20) über die zweite Datenkommunikationsverbindung durch die Koordinierungsapplikation (132; 332) und
- Empfangen einer Antwort des zweiten Datenträgers (20) auf die Anfrage über die zweite Datenkommunikationsverbindung durch die Koordinierungsapplikation (132; 332)
umfasst, sowie die weiteren Schritte:
- Empfangen von Anfragedaten des ersten Datenträgers (10) über die erste Datenkommunikationsverbindung und Erzeugen einer die Anfragedaten umfassenden Anfrage durch die Koordinierungsapplikation (132; 332) vor dem Senden der Anfrage von dem Kommunikationsgerät (100; 300) an den zweiten Datenträger (20) und/ oder
- Extrahieren von Antwortdaten aus der empfangenen Antwort des zweiten Datenträgers (20) und Senden der Antwortdaten an den ersten Datenträger (10) über die erste Datenkommunikationsverbindung durch die Koordinierungsapplikation (132; 332).

3. Verfahren nach Anspruch 1 oder 2, **dadurch gekennzeichnet, dass** die Koordinierungsapplikation (132; 332) den zweiten Datenträger (20) aus mehreren passiven portablen Datenträgern auswählt, um eine kontaktlose Datenkommunikationsverbindung zwischen dem Kommunikationsgerät (100; 300) und dem zweiten Datenträger (20) aufzubauen.

4. Verfahren nach einem der Ansprüche 1 bis 3, **dadurch gekennzeichnet, dass** die Koordinierungsapplikation (132; 332) beim Koordinieren einer Datenkommunikation zwischen dem ersten (10) und zweiten Datenträger (20) ein gegenseitiges Authentisieren zwischen dem ersten (10) und zweiten Datenträger (20) koordiniert.

5. Verfahren nach einem der Ansprüche 1 bis 4, **dadurch gekennzeichnet, dass** der erste Datenträger (10) und/oder der zweite Datenträger (20) über das Kommunikationsgerät (100; 300) mit Energie versorgt werden.

6. Verfahren nach einem der Ansprüche 1 bis 5, **dadurch gekennzeichnet, dass** die Koordinierungsapplikation (132; 332) die erste Datenkommunikationsverbindung zwischen dem Kommunikationsgerät (100; 300) und dem ersten Datenträger (10) als kontaktlose Datenkommunikationsverbindung aufbaut, falls das Kommunikationsgerät (300) und der erste Datenträger (10) über eine Köntaktlosschnittstelle (140; 340) verbunden sind, oder als kontaktbehaftete Datenkommunikationsverbindung aufbaut, falls das Kommunikationsgerät (100) und der erste Datenträger (10) über eine Kontaktschnittstelle verbunden sind.

7. Verfahren nach einem der Ansprüche 1 bis 6, **dadurch gekennzeichnet, dass** die erste Datenkommunikationsverbindung zwischen dem Kommunikationsgerät (100; 300) und dem ersten Datenträger (10) und/oder die zweite Datenkommunikationsverbindung zwischen dem Kommunikationsgerät (100; 300) und dem zweiten Datenträger (20) zwischen einer NFC-Schnittstelle (140; 340) des Kommunikationsgeräts (100; 300) und einer NFC-Schnittstelle des ersten Datenträgers (10) und/ oder einer NFC-Schnittstelle des zweiten Datenträgers (20) aufgebaut wird, wobei die Datenkommunikation über die erste Datenkommunikationsverbindung und/oder über die zweite Datenkommunikationsverbindung mittels des NFC-Kommunikationsprotokolls koordiniert wird.

8. Verfahren nach einem der Ansprüche 1 bis 7, **dadurch gekennzeichnet, dass** das Kommunikationsgerät (100) ein Mobilfunkendgerät ist und die Koordinierungsapplikation (132) auf einem Prozessor (120) des Mobilfunkendgeräts ausgeführt wird und der erste Datenträger (10) eine in das Mobilfunkendgerät eingesetzte (U)SIM-Mobilfunkkarte ist, wobei die Koordinierungsapplikation (132) eine kontaktbehaftete erste Datenkommunikationsverbindung zu der (U)SIM-Mobilfunkkarte über eine Kontaktschnittstelle zwischen dem Mobilfunkendgerät und der (U)SIM-Mobilfunkkarte aufbaut.

9. Verfahren nach einem der Ansprüche 1 bis 7, **dadurch gekennzeichnet, dass** das Kommunikationsgerät (300) ein portables RFID-Lesegerät ist und die Koordinierungsapplikation (332) auf einem Prozessor (320) des RFID-Lesegeräts ausgeführt wird, wobei die Koordinierungsapplikation (332) eine kontaktlose erste Datenkommunikationsverbindung zu dem ersten Datenträger (10) über eine RFID-Schnittstelle (340) zwischen dem RFID-Lesegerät und dem ersten Datenträger (10) aufbaut.

10. Verfahren nach einem der Ansprüche 1 bis 9, **dadurch gekennzeichnet, dass** die Koordinierungsapplikation (132; 332) die erste Datenkommunikationsverbindung zu einem Sicherheitsmodul, insbesondere einer (U)SIM-Mobilfunkkarte, oder einem Transaktionsmodul, insbesondere eine Zahlungsverkehrs-Chipkarte, als erstem Datenträger (10) aufbaut.

11. Kommunikationsgerät (100; 300), umfassend einen Prozessor (120; 320), einen Speicher (130; 330), eine Kontaktlosschnittstelle (140; 340) und eine in dem Speicher (130; 330) vorliegende und auf dem Prozessor (120; 320) ausführbare Koordinierungsapplikation (132; 332), wobei die Koordinierungsapplikation (132; 332) eingerichtet ist,
- eine erste Datenkommunikationsverbindung zwischen dem Kommunikationsgerät (100; 300) und einem ersten passiven, portablen Datenträger (10) aufzubauen; und
- eine kontaktlose zweite Datenkommunikationsverbindung zwischen der Kontaktlosschnittstelle (140; 340) des Kommunikationsgeräts (100; 300) und einem zweiten passiven, portablen Datenträger (20) derart aufzubauen, dass das Kommunikationsgerät (100; 300) als aktiver Kommunikationspartner gegenüber dem passiven zweiten Datenträger (20) fungiert; wobei das Kommunikationsgerät **dadurch gekennzeichnet ist, dass** die Koordinierungsapplikation weiter eingerichtet ist,
- eine Datenkommunikation des Kommunikationsgeräts (100; 300) zwischen dem ersten (10) und zweiten Datenträger (20) über die erste und zweite Datenkommunikationsverbindung derart zu koordinieren, dass der erste Datenträger (10) gegenüber dem zweiten Datenträger (20) als aktiver Kommunikationspartner erscheint.

12. Kommunikationsgerät (100; 300) nach Anspruch 11, **dadurch gekennzeichnet, dass** die Koordinierungsapplikation (132; 332) eingerichtet ist, die Koordinierung der Datenkommunikation vorzunehmen, indem
- über die zweite Datenkommunikationsverbindung eine Anfrage an den zweiten Datenträger (20) gesendet wird; und
- eine Antwort des zweiten Datenträgers (20) auf die Anfrage über die zweite Datenkommunikationsverbindung empfangen wird;
und des Weiteren, indem
- Anfragedaten des ersten Datenträgers (10) über die erste Datenkommunikationsverbindung empfangen werden und eine die Anfragedaten umfassende Anfrage zum Senden an den zweiten Datenträger (20) erzeugt wird; und/ oder
- Antwortdaten aus der empfangenen Antwort des zweiten Datenträgers (20) extrahiert werden und über die erste Datenkommunikationsverbindung an den ersten Datenträger (10) gesendet werden.

13. Kommunikationsgerät (100; 300) nach Anspruch 11 oder 12, **dadurch gekennzeichnet, dass** die Koordinierungsapplikation (132; 332) eingerichtet ist, aus mehreren über die Kontaktlosschnittstelle (140; 340) erreichbaren passiven, portablen Datenträgern den zweiten Datenträger (20) auszuwählen, um die kontaktlose Datenkommunikationsverbindung zwischen dem Kommunikationsgerät (100; 300) und dem zweiten Datenträger (20) aufzubauen.

14. Kommunikationsgerät (100; 300) nach einem der Ansprüche 11 bis 13, **dadurch gekennzeichnet, dass** die Koordinierungsapplikation (132; 332) eingerichtet ist, bei der Koordination der Datenkommunikation zwischen dem ersten (10) und zweiten Datenträger (20) ein gegenseitiges Authentisieren zwischen dem ersten (10) und zweiten Datenträger (20) zu koordinieren.

15. Kommunikationsgerät (100; 300) nach einem der Ansprüche 11 bis 14, **dadurch gekennzeichnet, dass** die Koordinierungsapplikation (132; 332) eingerichtet ist, eine Energieversorgung des zweiten Datenträgers (20) über die Kontaktlosschnittstelle (240) zu veranlassen und/ oder eine Energieversorgung des ersten Datenträgers (10) über die Kontaktlosschnittstelle (140) oder eine kontaktbehaftete Energieversorgungsschnittstelle zu veranlassen.

16. Kommunikationsgerät (100; 300) nach einem der Ansprüche 11 bis 15, **dadurch gekennzeichnet, dass** die Koordinierungsapplikation (132; 332) eingerichtet ist, die erste Datenkommunikationsverbindung zwischen der Kontaktlosschnittstelle (140; 340) des Kommunikationsgeräts (100; 300) und einer entsprechenden Kontaktlosschnittstelle des ersten Datenträgers (10) als kontaktlose Datenkommunikationsverbindung aufzubauen oder zwischen einer Kontaktschnittstelle des Kommunikationsgeräts (100; 300) und einer entsprechenden Kontaktschnittstelle des ersten Datenträgers (10) aufzubauen.

17. Kommunikationsgerät (100; 300) nach einem der Ansprüche 11 bis 16, **gekennzeichnet durch** eine NFC-Schnittstelle als Kontaktlosschnittstelle (140; 340), und **dadurch**, dass die Koordinierungsapplikation (132; 332) eingerichtet ist, die erste Datenkommunikationsverbindung zu dem ersten Datenträger (10) und/ oder die zweite Datenkommunikationsverbindung zu dem zweiten Datenträger (20) zwischen der NFC-Schnittstelle des Kommunikationsgeräts (100; 300) und einer entsprechenden NFC-Schnittstelle des ersten Datenträgers (10) und/oder des zweiten Datenträgers (20) aufzubauen und die Datenkommunikation über die erste Datenkommunikationsverbindung und/oder über die zweite Datenkommunikationsverbindung mittels des NFC-Kommunikationsprotokolls zu koordinieren.

18. Kommunikationsgerät (100; 300) nach Anspruch 17, **dadurch gekennzeichnet, dass** die Koordinierungsapplikation (132; 332) eingerichtet ist, mittels des NFC-Kommunikationsprotokolls Anweisungen an den zweiten Datenträger (20) zu senden und Antworten von dem zweiten Datenträger (20) zu empfangen.

19. Kommunikationsgerät (100; 300) nach einem der Ansprüche 11 bis 18, **dadurch gekennzeichnet, dass** das Kommunikationsgerät (100) ein Mobilfunkendgerät mit einer Kontaktschnittstelle ist und eingerichtet ist, eine (U)SIM-Mobilfunkkarte als ersten Datenträger (10) aufzunehmen, und die Koordinierungsapplikation (132) eingerichtet ist, eine kontaktbehaftete erste Datenkommunikationsverbindung über die Kontaktschnittstelle zu einer entsprechenden Kontaktschnittstelle der (U)SIM-Mobilfunkkarte aufzubauen.

20. Kommunikationsgerät (300) nach einem der Ansprüche 11 bis 18, **dadurch gekennzeichnet, dass** das Kommunikationsgerät (300) ein RFID-Lesegerät mit einer RFID-Schnittstelle (340) ist und die Koordinierungsapplikation (332) eingerichtet ist, eine kontaktlose erste Datenkommunikationsverbindung über die RFID-Schnittstelle (340) zu einer entsprechenden RFID-Schnittstelle des ersten Datenträgers (10) aufzubauen.

21. Kommunikationsgerät (100; 300) nach einem der Ansprüche 11 bis 20, **dadurch gekennzeichnet, dass** die Koordinierungsapplikation (132; 332) eingerichtet ist, die erste Datenkommunikationsverbindung zu einem Sicherheitsmodul, insbesondere einer (U)SIM-Mobilfunkkarte, oder einem Transaktionsmodul, insbesondere einer Zahlungsverkehrs-Chipkarte, als erstem Datenträger (10) aufzubauen.

## Claims

1. A method for setting up a data communication connection between first (10) and second (20) passive, portable data carriers through a communication device (100; 300) with a coordination application (132; 332), having the steps of:
- setting up a first data communication connection between the communication device (100; 300) and the first data carrier (10) through the coordination application (132; 332);
- setting up a contactless second data communication connection between the communication device (100; 300) as the active communication partner and the second data carrier (20) as the passive communication partner through the coordination application (132; 332); and
- coordinating a data communication between the first (10) and second (20) data carriers via the first and second data communication connections through the coordination application (132; 332), **characterized in that** the coordinating is effected such that the first data carrier (10) appears as the active communication partner relative to the second data carrier (20).

2. The method according to claim 1, **characterized in that** the coordinating of the data communication comprises the steps of
- sending a query from the communication device (100; 300) to the second data carrier (20) via the second data communication connection through the coordination application (132; 332), and
- receiving a response of the second data carrier (20) to the query via the second data communication connection through the coordination application (132; 332),
as well as the further steps of:
- receiving query data of the first data carrier (10) via the first data communication connection and generating a query comprising the query data through the coordination application (132; 332) before the sending of the query from the communication device (100; 300) to the second data carrier (20), and/or
- extracting response data from the received response of the second data carrier (20) and sending the response data to the first data carrier (10) via the first data communication connection through the coordination application (132; 332).

3. The method according to claim 1 or 2, **characterized in that** the coordination application (132; 332) selects the second data carrier (20) from several passive portable data carriers, in order to set up a contactless data communication connection between the communication device (100; 300) and the second data carrier (20).

4. The method according to any of claims 1 to 3, **characterized in that** the coordination application (132; 332) coordinates a mutual authenticating between the first (10) and second (20) data carriers upon coordinating a data communication between the first (10) and second (20) data carriers.

5. The method according to any of claims 1 to 4, **characterized in that** the first data carrier (10) and/or the second data carrier (20) are supplied with power via the communication device (100; 300).

6. The method according to any of claims 1 to 5, **characterized in that** the coordination application (132; 332) sets up the first data communication connection between the communication device (100; 300) and the first data carrier (10) as a contactless data communication connection if the communication device (300) and the first data carrier (10) are connected via a contactless interface (140; 340), or sets it up as a contact-type data communication connection if the communication device (100) and the first data carrier (10) are connected via a contact interface.

7. The method according to any of claims 1 to 6, **characterized in that** the first data communication connection between the communication device (100; 300) and the first data carrier (10) and/or the second data communication connection between the communication device (100; 300) and the second data carrier (20) is set up between an NFC interface (140; 340) of the communication device (100; 300) and an NFC interface of the first data carrier (10) and/or an NFC interface of the second data carrier (20), whereby the data communication via the first data communication connection and/or via the second data communication connection is coordinated by means of the NFC communication protocol.

8. The method according to any of claims 1 to 7, **characterized in that** the communication device (100) is a mobile radio end device, and the coordination application (132) is executed on a processor (120) of the mobile radio end device, and the first data carrier (10) is a (U)SIM mobile radio card inserted into the mobile radio end device, whereby the coordination application (132) sets up a contact-type first data communication connection to the (U)SIM mobile radio card via a contact interface between the mobile radio end device and the (U)SIM mobile radio card.

9. The method according to any of claims 1 to 7, **characterized in that** the communication device (300) is a portable RFID reading device, and the coordination application (332) is executed on a processor (320) of the RFID reading device, whereby the coordination application (332) sets up a contactless first data communication connection to the first data carrier (10) via an RFID interface (340) between the RFID reading device and the first data carrier (10).

10. The method according to any of claims 1 to 9, **characterized in that** the coordination application (132; 332) sets up the first data communication connection to a security module, in particular a (U)SIM mobile radio card, or a transaction module, in particular a payment chip card, as the first data carrier (10).

11. A communication device (100; 300), comprising a processor (120; 320), a memory (130; 330), a contactless interface (140; 340) and a coordination application (132; 332) present in the memory (130; 330) and executable on the processor (120; 320), whereby the coordination application (132; 332) is adapted to
- set up a first data communication connection between the communication device (100; 300) and a first passive, portable data carrier (10); and
- set up a contactless second data communication connection between the contactless interface (140; 340) of the communication device (100; 300) and a second passive, portable data carrier (20) such that the communication device (100; 300) acts as the active communication partner relative to the passive second data carrier (20); whereby the communication device is **characterized in that** the coordination application is further adapted to
- coordinate a data communication of the communication device (100; 300) between the first (10) and second (20) data carriers via the first and second data communication connections such that the first data carrier (10) appears as the active communication partner relative to the second data carrier (20).

12. The communication device (100; 300) according to claim 11, **characterized in that** the coordination application (132; 332) is adapted to perform the coordination of the data communication by
- a query being sent to the second data carrier (20) via the second data communication connection; and
- a response of the second data carrier (20) to the query being received via the second data communication connection;
and furthermore by
- query data of the first data carrier (10) being received via the first data communication connection, and a query comprising the query data being generated for sending to the second data carrier (20); and/or
- response data being extracted from the received response of the second data carrier (20) and being sent to the first data carrier (10) via the first data communication connection.

13. The communication device (100; 300) according to claim 11 or 12, **characterized in that** the coordination application (132; 332) is adapted to select the second data carrier (20) from several passive, portable data carriers reachable via the contactless interface (140; 340), in order to set up the contactless data communication connection between the communication device (100; 300) and the second data carrier (20).

14. The communication device (100; 300) according to any of claims 11 to 13, **characterized in that** the coordination application (132; 332) is adapted to coordinate a mutual authenticating between the first (10) and second (20) data carriers upon the coordination of the data communication between the first (10) and second (20) data carriers.

15. The communication device (100; 300) according to any of claims 11 to 14, **characterized in that** the coordination application (132; 332) is adapted to cause a power supply to the second data carrier (20) via the contactless interface (240) and/or to cause a power supply to the first data carrier (10) via the contactless interface (140) or a contact-type power supply interface.

16. The communication device (100; 300) according to any of claims 11 to 15, **characterized in that** the coordination application (132; 332) is adapted to set up the first data communication connection between the contactless interface (140; 340) of the communication device (100; 300) and a corresponding contactless interface of the first data carrier (10) as a contactless data communication connection, or to set it up between a contact interface of the communication device (100; 300) and a corresponding contact interface of the first data carrier (10).

17. The communication device (100; 300) according to any of claims 11 to 16, **characterized by** an NFC interface as the contactless interface (140; 340), and in that the coordination application (132; 332) is adapted to set up the first data communication connection to the first data carrier (10) and/or the second data communication connection to the second data carrier (20) between the NFC interface of the communication device (100; 300) and a corresponding NFC interface of the first data carrier (10) and/or of the second data carrier (20), and to coordinate the data communication via the first data communication connection and/or via the second data communication connection by means of the NFC communication protocol.

18. The communication device (100; 300) according to claim 17, **characterized in that** the coordination application (132; 332) is adapted to send instructions to the second data carrier (20) and receive responses from the second data carrier (20) by means of the NFC communication protocol.

19. The communication device (100; 300) according to any of claims 11 to 18, **characterized in that** the communication device (100) is a mobile radio end device having a contact interface and is adapted to take up a (U)SIM mobile radio card as the first data carrier (10), and the coordination application (132) is adapted to set up a contact-type first data communication connection via the contact interface to a corresponding contact interface of the (U)SIM mobile radio card.

20. The communication device (300) according to any of claims 11 to 18, **characterized in that** the communication device (300) is an RFID reading device having an RFID interface (340), and the coordination application (332) is adapted to set up a contactless first data communication connection via the RFID interface (340) to a corresponding RFID interface of the first data carrier (10).

21. The communication device (100; 300) according to any of claims 11 to 20, **characterized in that** the coordination application (132; 332) is adapted to set up the first data communication connection to a security module, in particular a (U)SIM mobile radio card, or a transaction module, in particular a payment chip card, as the first data carrier (10).

## Revendications

1. Procédé d'établissement d'une connexion de communication de données entre un premier (10) et second support de données (20) portable passif par un appareil de communication (100; 300) comportant une application de coordination (132; 332), comprenant les étapes :
- établissement d'une première connexion de communication de données entre l'appareil de communication (100; 300) et le premier support de données (10) par l'application de coordination (132; 332);
- établissement d'une seconde connexion de communication de données, laquelle connexion étant sans contact, entre l'appareil de communication (100; 300) en tant que partenaire de communication actif et le second support de données (20) en tant que partenaire de communication passif par l'application de coordination (132; 332); et
- coordination d'une communication de données entre le premier (10) et second support de données (20) par l'intermédiaire de la première et seconde connexion de communication de données par l'application de coordination (132; 332), **caractérisé en ce que** la coordination a lieu de telle façon que le premier support de données (10) apparaît vis-à-vis du second support de données (20) comme partenaire de communication actif.

2. Procédé selon la revendication 1, **caractérisé en ce que** la coordination de la communication de données comprend les étapes
- envoi d'une demande de l'appareil de communication (100; 300) au second support de données (20) par l'intermédiaire de la seconde connexion de communication de données par l'application de coordination (132; 332) et
- réception d'une réponse du second support de données (20) à la demande par l'intermédiaire de la seconde connexion de communication de données par l'application de coordination (132; 332)
ainsi que les étapes supplémentaires :
- réception de données de demande du premier support de données (10) par l'intermédiaire de la première connexion de communication de données et génération d'une demande renfermant les données de demande par l'application de coordination (132; 332) avant l'envoi de la demande de l'appareil de communication (100; 300) au second support de données (20) et/ou
- extraction de données de réponses de la réponse du second support de données (20) reçue et envoi des données de réponse au premier support de données (10) par l'intermédiaire de la première connexion de communication de données par l'application de coordination (132; 332).

3. Procédé selon la revendication 1 ou 2, **caractérisé en ce que** l'application de coordination (132; 332) sélectionne le second support de données (20) parmi plusieurs supports de données portables passifs afin d'établir une connexion de communication de données sans contact entre l'appareil de communication (100; 300) et le second support de données (20).

4. Procédé selon une des revendications de 1 à 3, **caractérisé en ce que**, lors de la coordination d'une communication de données entre le premier (10) et second support de données (20), l'application de coordination (132; 332) coordonne une authentification réciproque entre le premier (10) et second support de données (20).

5. Procédé selon une des revendications de 1 à 4, **caractérisé en ce que** le premier support de données (10) et/ou le second support de données (20) sont alimentés en énergie par l'intermédiaire de l'appareil de communication (100; 300).

6. Procédé selon une des revendications de 1 à 5, **caractérisé en ce que** l'application de coordination (132; 332) établit la première connexion de communication de données entre l'appareil de communication (100; 300) et le premier support de données (10) en tant que connexion de communication de données sans contact dans le cas où l'appareil de communication (300) et le premier support de données (10) sont connectés par l'intermédiaire d'une interface (140; 340) sans contact, ou l'établit en tant que connexion de communication de données à contact dans le cas où l'appareil de communication (100) et le premier support de données (10) sont connectés par l'intermédiaire d'une interface à contact.

7. Procédé selon une des revendications de 1 à 6, **caractérisé en ce que** la première connexion de communication de données entre l'appareil de communication (100; 300) et le premier support de données (10) et/ou la seconde connexion de communication de données entre l'appareil de communication (100; 300) et le second support de données (20) est établie entre une interface NFC (140; 340) de l'appareil de communication (100; 300) et une interface NFC du premier support de données (10) et/ou une interface NFC du second support de données (20), la communication de données étant coordonnée par l'intermédiaire de la première connexion de communication de données et/ou par l'intermédiaire de la seconde connexion de communication de données au moyen du protocole de communication NFC.

8. Procédé selon une des revendications de 1 à 7, **caractérisé en ce que** l'appareil de communication (100) est un terminal de radiocommunication mobile et l'application de coordination (132) est exécutée sur un processeur (120) du terminal de radiocommunication mobile et le premier support de données (10) est une carte de téléphonie mobile (U)SIM utilisée dans le terminal de radiocommunication mobile, l'application de coordination (132) établissant une première connexion de communication de données, qui est à contact, avec la carte de téléphonie mobile (U)SIM par l'intermédiaire d'une interface à contact entre le terminal de radiocommunication mobile et la carte de téléphonie mobile (U)SIM.

9. Procédé selon une des revendications de 1 à 7, **caractérisé en ce que** l'appareil de communication (300) est un appareil de lecture RFID portable et l'application de coordination (332) est exécutée sur un processeur (320) de l'appareil de lecture RFID, l'application de coordination (332) établissant une première connexion de communication de données, qui est sans contact, avec le premier support de données (10) par l'intermédiaire d'une interface RFID (340) entre l'appareil de lecture RFID et le premier support de données (10).

10. Procédé selon une des revendications de 1 à 9, **caractérisé en ce que** l'application de coordination (132; 332) établit la première connexion de communication de données avec un module de sécurité, notamment une carte de téléphonie mobile (U)SIM, ou avec un module de transaction, notamment une carte à puce pour transactions financières, en tant que premier support de données (10).

11. Appareil de communication (100; 300), comprenant un processeur (120; 320), une mémoire (130; 330), une interface sans contact (140; 340) et une application de coordination (132; 332) qui se trouve dans la mémoire (130; 330) et est exécutable sur le processeur (120; 320), l'application de coordination (132; 332) étant configurée pour
- établir une première connexion de communication de données entre l'appareil de communication (100; 300) et un premier support de données (10) portable passif; et
- établir une seconde connexion de communication de données, laquelle étant sans contact, entre l'interface sans contact (140; 340) de l'appareil de communication (100; 300) et un second support de données (20) portable passif de telle façon que l'appareil de communication (100; 300) agit comme partenaire de communication actif vis-à-vis du second support de données (20), qui est passif; l'appareil de communication étant **caractérisé en ce que** l'application de coordination est en outre configurée pour
- coordonner une communication de données de l'appareil de communication (100; 300) entre le premier (10) et second support de données (20) par l'intermédiaire de la première et seconde connexion de communication de données de telle façon que le premier support de données (10) apparaît vis-à-vis du second support de données (20) comme partenaire de communication actif.

12. Appareil de communication (100; 300) selon la revendication 11, **caractérisé en ce que** l'application de coordination (132; 332) est configurée pour effectuer la coordination de la communication de données, qui a lieu **en ce que**
- une demande au second support de données (20) est envoyée par l'intermédiaire de la seconde connexion de communication de données; et
- une réponse du second support de données (20) à la demande est reçue par l'intermédiaire de la seconde connexion de communication de données ;
et en outre **en ce que**
- des données de demande du premier support de données (10) sont reçues par l'intermédiaire de la première connexion de communication de données et une demande renfermant les données de demande est générée pour l'envoi au second support de données (20); et/ou
- des données de réponse de la réponse du second support de données (20) reçue sont extraites et sont envoyées au premier support de données (10) par l'intermédiaire de la première connexion de communication de données.

13. Appareil de communication (100; 300) selon la revendication 11 ou 12, **caractérisé en ce que** l'application de coordination (132; 332) est configurée pour sélectionner parmi plusieurs supports de données portables passifs atteignables par l'intermédiaire de l'interface sans contact (140; 340) le second support de données (20) afin d'établir la connexion de communication de données sans contact entre l'appareil de communication (100; 300) et le second support de données (20).

14. Appareil de communication (100; 300) selon une des revendications de 11 à 13, **caractérisé en ce que** l'application de coordination (132; 332) est configurée pour coordonner lors de la coordination de la communication de données entre le premier (10) et second support de données (20) une authentification réciproque entre le premier (10) et second support de données (20).

15. Appareil de communication (100; 300) selon une des revendications de 11 à 14, **caractérisé en ce que** l'application de coordination (132; 332) est configurée pour occasionner une alimentation du second support de données (20) en énergie par l'intermédiaire de l'interface sans contact (240) et/ou pour occasionner une alimentation du premier support de données (10) en énergie par l'intermédiaire de l'interface sans contact (140) ou d'une interface d'alimentation en énergie à contact.

16. Appareil de communication (100; 300) selon une des revendications de 11 à 15, **caractérisé en ce que** l'application de coordination (132; 332) est configurée pour établir la première connexion de communication de données entre l'interface sans contact (140; 340) de l'appareil de communication (100; 300) et une interface sans contact correspondante du premier support de données (10) en tant que connexion de communication de données sans contact ou bien pour l'établir entre une interface à contact de l'appareil de communication (100; 300) et une interface à contact correspondante du premier support de données (10).

17. Appareil de communication (100; 300) selon une des revendications de 11 à 16, **caractérisé par** une interface NFC en tant qu'interface sans contact (140; 340), et en ce que l'application de coordination (132; 332) est configurée pour établir la première connexion de communication de données avec le premier support de données (10) et/ou la seconde connexion de communication de données avec le second support de données (20) entre l'interface NFC de l'appareil de communication (100; 300) et une interface NFC correspondante du premier support de données (10) et/ou du second support de données (20), et pour coordonner la communication de données par l'intermédiaire de la première connexion de communication de données et/ou par l'intermédiaire de la seconde connexion de communication de données au moyen du protocole de communication NFC.

18. Appareil de communication (100; 300) selon la revendication 17, **caractérisé en ce que** l'application de coordination (132; 332) est configurée pour envoyer au moyen du protocole de communication NFC des instructions au second support de données (20) et pour recevoir des réponses du second support de données (20).

19. Appareil de communication (100; 300) selon une des revendications de 11 à 18, **caractérisé en ce que** l'appareil de communication (100) est un terminal de radiocommunication mobile comportant une interface à contact et est configuré pour héberger une carte de téléphonie mobile (U)SIM en tant que premier support de données (10), et **en ce que** l'application de coordination (132) est configurée pour établir, par l'intermédiaire de l'interface à contact, une première connexion de communication de données, laquelle connexion étant à contact, avec une interface NFC à contact correspondante de la carte de téléphonie mobile (U)SIM.

20. Appareil de communication (300) selon une des revendications de 11 à 18, **caractérisé en ce que** l'appareil de communication (300) est un appareil de lecture RFID comportant une interface RFID (340) et l'application de coordination (332) est configurée pour établir une première connexion de communication de données, qui est sans contact, par l'intermédiaire de l'interface RFID (340) avec une interface RFID correspondante du premier support de données (10).

21. Appareil de communication (100; 300) selon une des revendications de 11 à 20, **caractérisé en ce que** l'application de coordination (132; 332) est configurée pour établir la première connexion de communication de données avec un module de sécurité, notamment une carte de téléphonie mobile (U)SIM, ou avec un module de transaction, notamment une carte à puce pour transactions financières, en tant que premier support de données (10).
